# EUROPÄISCHE PATENTSCHRIFT

(11) **EP 0 832 154 B1**
(45) Veröffentlichungstag und Bekanntmachung des Hinweises auf die Patenterteilung: **31.10.2001**
(21) Anmeldenummer: 96920809.9
(22) Anmeldetag: 07.06.1996
(51) Int. Cl.: C08J 11/28

(54) **RECYCLING VON AUSGEHÄRTETEN POLYSULFID- UND/ODER POLYMERCAPTAN-KLEB-/DICHTSTOFFEN**
PROCESS FOR RECYCLING HARDENED POLYSULPHIDE AND/OR POLYMERCAPTAN ADHESIVES AND SEALANTS
RECYCLAGE DE SUBSTANCES ADHESIVES/D'ETANCHEITE A BASE DE POLYSULFURES ET/OU DE POLYMERCAPTANS DURCIES

(30) Priorität: 14.06.1995 DE 19521671
(43) Veröffentlichungstag der Anmeldung: 01.04.1998
(73) Patentinhaber: Henkel Teroson GmbH, 69123 Heidelberg (DE)
(72) Erfinder: GRIMM, Stefan, D-68723 Oftersheim (DE); PRESSEL, Karl-Heinz, D-69250 Schönau (DE); PRÖBSTER, Manfred, D-69226 Nu loch (DE)
(74) Vertreter: Mathes, Nikolaus, Dr.
(86) Internationale Anmeldenummer: EP9602488
(87) Internationale Veröffentlichungsnummer: WO9700283

(56) Entgegenhaltungen:
- EP-A- 0 188 833
- EP-A- 0 549 025
- EP-A- 0 622 403
- DE-B- 1 131 012

## Beschreibung

Die Erfindung betrifft ein Verfahren zur Wiederaufarbeitung von ausgehärteten oder teilweise ausgehärteten Polysulfid- und/oder Polymercaptan-Polymerzusammensetzungen.

Ein- oder mehrkomponentige Zusammensetzungen auf der Basis von Polysulfid-Polymeren und/oder Polymercaptan-Polymeren werden im Hoch- und Tiefbau, in der Flugzeug- oder Fahrzeugindustrie, im Schiffbau sowie im großen Umfang für die Herstellung von Isoliergläsern verwendet. Sowohl bei der industriellen Anwendung im Fahrzeugbau, im Schiffbau, im Flugzeugbau und in der Isolierglasherstellung fallen die verwendeten Dichtstoffe, Klebstoffe oder Beschichtungsmaterialien als Reststoffe und Abfälle im teilweise oder vollständig ausgehärteten Zustand an. Zusammensetzungen auf der Basis von Polysulfid-Polymeren und/oder Polymercaptanen zeichnen sich insbesondere durch ihre hohe Licht- und Ozonbeständigkeit sowie ihre Beständigkeit gegen viele Lösungsmittel und Chemikalien aus. Aus diesem Grunde werden Kleb-/Dichtstoffe auf Basis von Polysulfiden bzw. Polymercaptanen beispielsweise seit langer Zeit zur Herstellung von Isoliergläsern verwendet. (Siehe z.B. H. Lucke, "Aliphatische Polysulfide, Heidelberg (1992), Seite 114).

Bei einkomponentigen Systemen entstehen ausgehärtete oder teilweise ausgehärtete Reste zum Teil schon bei der Herstellung in den Produktionsanlagen, während der Verarbeitung bleiben Reste in den Verarbeitungsgeräten und Verarbeitungsgebinden. Bei den mehrkomponentigen Systemen entstehen teilweise oder vollständig ausgehärtete Reste in den materialführenden Teilen von Verarbeitungsanlagen, beim Produktionsbeginn oder Abschalten dieser Anlagen sowie bei deren Reinigung während des sogenannten "Spülvorganges" sowie beim Entfernen überschüssiger Mengen während des Applizierens auf die Bauteile oder Fahrzeuge. In zunehmendem Maße fallen auch nicht wiederverwertbare und bisher als Abfall zu entsorgende, feste Elastomere nach dem Ende der Lebenszeit derjenigen Teile an, in denen diese Elastomere eingesetzt waren. Da die Polysulfide bzw. Polymercaptane bereits seit mehreren Jahrzehnten als Klebstoffe zur Herstellung von Mehrscheiben-Isoliergläsern sowie als Fugendichtstoffe und Beschichtungsmaterialien im_ Hoch- bzw. Tiefbau Verwendung finden, fallen beim Umbau, der Sanierung und Demontage ausgehärtete Kleb-/Dichtstoffe oder Beschichtungsmaterialien an, die bisher als Abfall entsorgt werden mußten.

Es besteht daher Bedarf an Verfahren, die es ermöglichen, diese Materialien der Wiederverwertung zuzuführen.

Die DE-C-4142500 beschreibt ein Verfahren zur Wiederaufarbeitung ausgehärteter Polysulfid- und/oder Polymercaptan-Elastomerer. Dort wird vorgeschlagen, 0,5 bis 400 Gew.% ausgehärtetes Elastomer in einer flüssigen Di- oder Polymercaptoverbindung zu flüssig-pastösen Mercapto-endständigen Prepolymeren umzusetzen, und diese Umsetzungsprodukte für den erneuten Einsatz als Polysulfid- und/oder Polymercaptan-Dichtmassen einzusetzen. Obwohl diese Methode im Prinzip brauchbare Ergebnisse liefert, ist die Lagerstabilität der auf diese Weise hergestellten

Polysulfidkomponente unbefriedigend. So wird je nach eingetragener Menge des Recyclates bereits nach relativ kurzer Lagerzeit eine starke Hautbildung aus zumindest teilweise ausgehärtetem Kleb-/Dichtstoff oder Beschichtungsmaterial auf der Oberfläche der Polysulfidhaltigen Komponente beobachtet. Es wird vermutet, daß diese Härtungsreaktion durch den Luftsauerstoff in Zusammenhang mit den durch das Wiederaufarbeitungsverfahren in die Polysulfidkomponente hineingelangten aminischen Bestandteilen hervorgerufen wird.

Die EP-A-0622403 beschreibt ein Verfahren, bei dem Mercaptogruppen - terminierte, flüssige Polysulfide als Reduktionsmittel verwendet werden, um Dichtstoffe aus oxidierten Polysulfid - Polymeren zurück zugewinnen. Da in den wiederaufzuarbeitenden Dichtstoff immer restliche Oxidationsagenzien vorhanden sind, muß demzufolge der Anteil an flüssigem Polysulfid, der mit dem aufzuarbeitenden ausgehärteten Dichtstoff eingesetzt wird, sehr groß sein, damit die Reaktionsmischung nach der Aufarbeitung noch einen für das nachfolgende Härtungsverfahren notwendigen Anteil an freien Mercaptogruppen enthält. Ein Wiederaufarbeitungsverfahren bei dem das Depolymerisat in die Härterkomponente von 2-oder Mehrkomponentigen Polysulfid - oder Polymercaptan - Zusammensetzungen eingemischt wird, wird nicht offenbart.

Es bestand also Bedarf, ein verbessertes Wiederaufarbeitungsverfahren für ausgehärtete Polysulfid- und/oder Polymercaptan-Zusammensetzungen zu finden, bei dem die Zusammensetzungen, die die wiederaufgearbeiteten Produkte enthalten, keine Lagerstabilitätsprobleme aufweisen.

Erfindungsgemäß wird die Aufgabe dadurch gelöst, daß die ausgehärteten oder teilweise ausgehärteten Polysulfid- und/oder Polymercaptan-Polymerzusammensetzungen zunächst mit Hilfe eines Vulkanisationsbeschleunigers als Depolymerisierungsmittel in einem riedrigviskosen, nicht flüchtigen flüssigen Weichmacher depolymerisiert werden und danach das Depolymerisat in die Härterkomponente von zwei- oder mehrkomponentigen Polysulfid- und/oder Polymercaptan-Zusammensetzungen eingemischt wird.

Der Abbau bzw. teilweise Abbau von Polysulfid-Zusammensetzungen mit Hilfe von Depolymerisationsmitteln ist seit langer Zeit bekannt. So beschreibt die US-A-2548718 ein Entschichtungsmittel für Beschichtungen auf der Basis von Polysulfid-Elastomeren. Dort wird vorgeschlagen, ein Reaktionsprodukt aus einem oder mehreren Dialkylaminen und Schwefelkohlenstoff in Lösungsmitteln, wie z.B. Ketonen oder Halogenkohlenwasserstoffen zur Entschichtung von Polysulfid-Beschichtungen zu verwenden. Das Abbauprodukt wird gemäß dieser Lehre jedoch als Abfall verworfen und nicht wiederverwertet.

Die EP-B-188833 beschreibt ein Verfahren zum Reinigen von mit Polymerrückständen aus kautschukartigen Polysulfid-Elastomeren verunreinigten Vorrichtungen. Dieses Verfahren verwendet eine Mischung aus einem organischen Lösungsmittel, einem Kettenabbruchmittel oder Kettenabbaumittel aus Mercaptogruppen aufweisenden Verbindungen und einem Amin als Reaktionsbeschleuniger. Gemäß dieser Lehre kann das verwendete Lösungsmittel wieder aufgearbeitet werden, über den Verbleib der abgebauten Polymerrückstände werden keine Angaben gemacht.

Erfindungsgemäß werden die ausgehärteten oder teilweise ausgehärteten Polysulfid- und/oder Polymercaptan-Zusammensetzungen zerkleinert und in einer niedrigviskosen nicht flüchtigen Flüssigkeit unter Zusatz des Depolymerisationsmittels depolymerisiert. Als niedrigviskose nicht flüchtige Flüssigkeit werden vorzugsweise Weichmacher verwendet. Prinzipiell ist hier jeder niedrigviskose-Weichmacher geeignet, vorzugsweise werden jedoch solche Weichmacher verwendet, die auch in Härterpasten von zwei- oder mehrkomponentigen Polysulfid- oder Polymercaptan-Systemen eingesetzt werden. Beispiele für derartige Weichmacher sind Alkylsulfonsäureester des Phenols/Kresols, Alkyl- und/oder Arylphosphate, Dialkylester von aliphatischen Dicarbonsäuren sowie insbesondere Dialkyl- bzw. Arylester der Phthalsäure, ganz besonders bevorzugt wird Benzylbutylphthalat eingesetzt.

Im Prinzip kann jedes Depolymerisierungsmittel verwendet werden, erfindungsgemäß bevorzugt sind die aus der Kautschuk-Technologie bekannten Vulkanisationsbeschleuniger wie z.B. Thiazolbeschleuniger, Thiurame, Dithiocarbamate, Dithiocarbamylsulfenamide, Xanthogenate, schwefelhaltige Triazinbeschleuniger, Thioharnstoffderivate oder sonstige basische Schwefelverbindungen. Ggf. können diese Depolymerisationsmittel in Kombination mit anderen basischen

Verbindungen wie Aminen oder Guanidin-Verbindungen verwendet werden. In einer besonders bevorzugten Ausführungsform werden als Depolymerisationsmittel wäßrige Lösungen der Salze von Dithiocarbamaten, Xanthogenaten, Thioharnstoffderivaten, Thiazolderivaten oder sonstigen basischen Schwefelverbindungen verwendet.

Die Depolymerisation wird in einem Gefäß unter Rühren bei Temperaturen zwischen 0 und 100°C, vorzugsweise bei erhöhter Temperatur zwischen 50 und 90°C vorgenommen. Obwohl dies in der Regel nicht notwendig ist, kann die Depolymerisation auch unter Druck in einem Autoklaven vorgenommen werden, so daß die Temperaturen auch über 100°C sein können. Vorteil dieser Ausführungsart sind besonders kurze Reaktionszeiten für die vollständige Depolymerisation.

Als besonders bevorzugte Depolymerisationsmittel werden etwa 40%ige wässrige Lösungen von Salzen der Dithiocarbamidsäure, z.B. Natriumdimethyldithiocarbamat eingesetzt. Wenn ein sehr niedrigviskoser Weichmacher, wie z.B. das Benzylbutylphthalat, als flüssiges Medium verwendet wird, sind die nach der Depolymerisation enthaltenden Lösungen/Suspensionen sehr niedrigviskos. Dadurch kann der Anteil an zu depolymerisierendem Material im Gemisch sehr hoch sein, 40 bis 60%ige Lösungen/ Suspensionen sind ohne große Schwierigkeit technisch verarbeitbar.

Obwohl die so erhaltene Lösung/Suspension des Depolymerisates prinzipiell auch in die sog. A-Komponente eingearbeitet werden kann, wird es erfindungsgemäß bevorzugt, die Depolymerisat-Mischung in die sog. B-Komponente, d.h., die Härterkomponente einzuarbeiten. Als A-Komponente wird im allgemeinen Sprachgebrauch die Komponente verstanden, die das zur Aushärtungs-Reaktion befähigte in der Regel flüssige Polysulfid- und/oder Polymercaptan-Polymer enthält. Neben den eben genannten Polysulfid- und/oder Polymercaptan-Polymeren enthält diese Komponente Weichmacher, in der Regel Phthalsäureester wie z.B. Benzylbutylphthalat; Füllstoffe wie z.B. beschichtete und/oder nichtbeschichtete Kreiden (Calciumcarbonate, Calcium-Magnesiumcarbonate), Aluminium-Silikate, Magnesium-Silikate, Kaolin, Schwerspat; Thixotropierungsmittel wie z.B. Bentone (Montmorillonit), pyrogene Kieselsäuren, faserförmige Thixotropierungsmittel; Pigmente wie z.B. Titandioxid, Ruß sowie anorganische Farbpigmente; Trocknungsmittel wie z.B. Molekularsiebe, Calciumoxid, Bariumoxid; ggf. kann die A-Komponente noch Haftvermittler wie z.B. organofunktionelle Trialkoxysilane und Verzögerer wie z.B. langkettige Fettsäuren (Stearinsäure und deren Derivate) sowie Beschleuniger in Form von Schwefel, Magnesiumacetat, Thiuramen, Aminen oder Guanidin-verbindungen enthalten.

Die Komponente B enthält neben dem als Vernetzer wirkenden Oxidationsmittel wie z.B. Bleidioxid, Mangandioxid, Natrium-Perborat oder organischen Hydroperoxiden noch Weichmacher, Füllstoffe, Verzögerer, Pigmente, Schwefel, Alterungsschutzmittel, ggf. Haftvermittler auf der Basis von organofunktionellen Trialkoxy- oder Dialkoxyalkylsilanen sowie Beschleunigern wie z.B. Thiuramdisulfiden, Guanidinen, Dithiocarbamaten sowie erfindungsgemäß zwischen 2 und 80 Gew.%, vorzugsweise 20 bis 70 Gew.% und ganz besonders bevorzugt 40 bis 60 Gew.% des Depolymerisates.

Es ist neu und völlig überraschend, daß die Depolymerisate von Polysulfiden bzw. Polymercaptanen in der Härterkomponente, insbesondere in so hohen Anteilen einsetzbar sind, ohne daß es zu Störungen in der Aushärtungsreaktion oder in der Lagerstabilität der Zusammensetzungen kommt.

Gegenüber dem Wiederaufarbeitungsverfahren gemäß Stand der Technik ergeben sich bei dem erfindungsgemäßen Verfahren zwei entscheidende Vorteile:

Zum einen kommt es weder bei der A-Komponente noch bei der B-Komponente zu Problemen mit der Lagerstabilität.

Es hat sich in der Technologie der zweikomponentigen Polysulfid- und/oder Polymercaptanzusammensetzungen eingebürgert, die Komponente A in einem hellen Farbton herzustellen. Wegen des heute überwiegend verwendeten Mangandioxids ist die Komponente B nämlich dunkel gefärbt, sie wird durch Pigmentierung auf einen Anthrazit-Farbton eingestellt. Durch visuelle Beurteilung der Homogenität des Farbtons der gemischten Kleb-/Dichtstoffzusammensetzung oder Beschichtungszusammensetzung aus Komponente A und B kann der Anwender sehr leicht feststellen, ob vollständige Durchmischung der härtenden Zusammensetzung erfolgt ist. Wenn das wiederaufzuarbeitende Material in die A-Komponente eingearbeitet wird, wie in der DE-C-4142500 vorgeschlagen, wird diese Komponente durch das Depolymerisat dunkler gefärbt, wodurch sich enge Mengenbegrenzungen in der Aufnahmefähigkeit für die A-Komponente ergeben, es sei denn, man verzichtet auf den an sich unabdingbaren Vorteil der leichten visuellen Kontrolle der Mischeffizienz für die A-/B-Mischung beim Anwender.

Anhand der nachfolgenden Beispiele soll die Erfindung näher erläutert werden, wobei die Auswahl der Beispiele keine Beschränkung des Umfanges des Erfindungsgegenstandes darstellen sollen. Falls nicht anders angegeben, sind alle Mengenangaben der Rezepturbestandteile Gewichtsteile.

### Herstellung der Depolymerisat-Lösung/-Suspension

In einen heizbaren Rührkessel mit Flügelrührer wurden unter Rühren die folgenden Komponenten gegeben:
Benzylbutylphthalat, ausgehärteter 2-Komponenten-Kleb-/-Dichtstoff auf Basis Polysulfid (Terostat 998 R, Fa. Teroson), Depolymerisationsmittel. Unter Rühren wurde so lange auf 80°C erwärmt, bis eine homogene Lösung bzw. Suspension entstanden war, dabei war das Polymer bzw. dessen Umsetzungsprodukt vollständig im Weichmacher gelöst. Die Lagerstabilität des Depolymerisates wurde duch Viskositätsmessungen bis zu 4 Monate nach Herstellung verfolgt. Die Ergebnisse sind in der nachfolgenden Tabelle 1 aufgeführt.

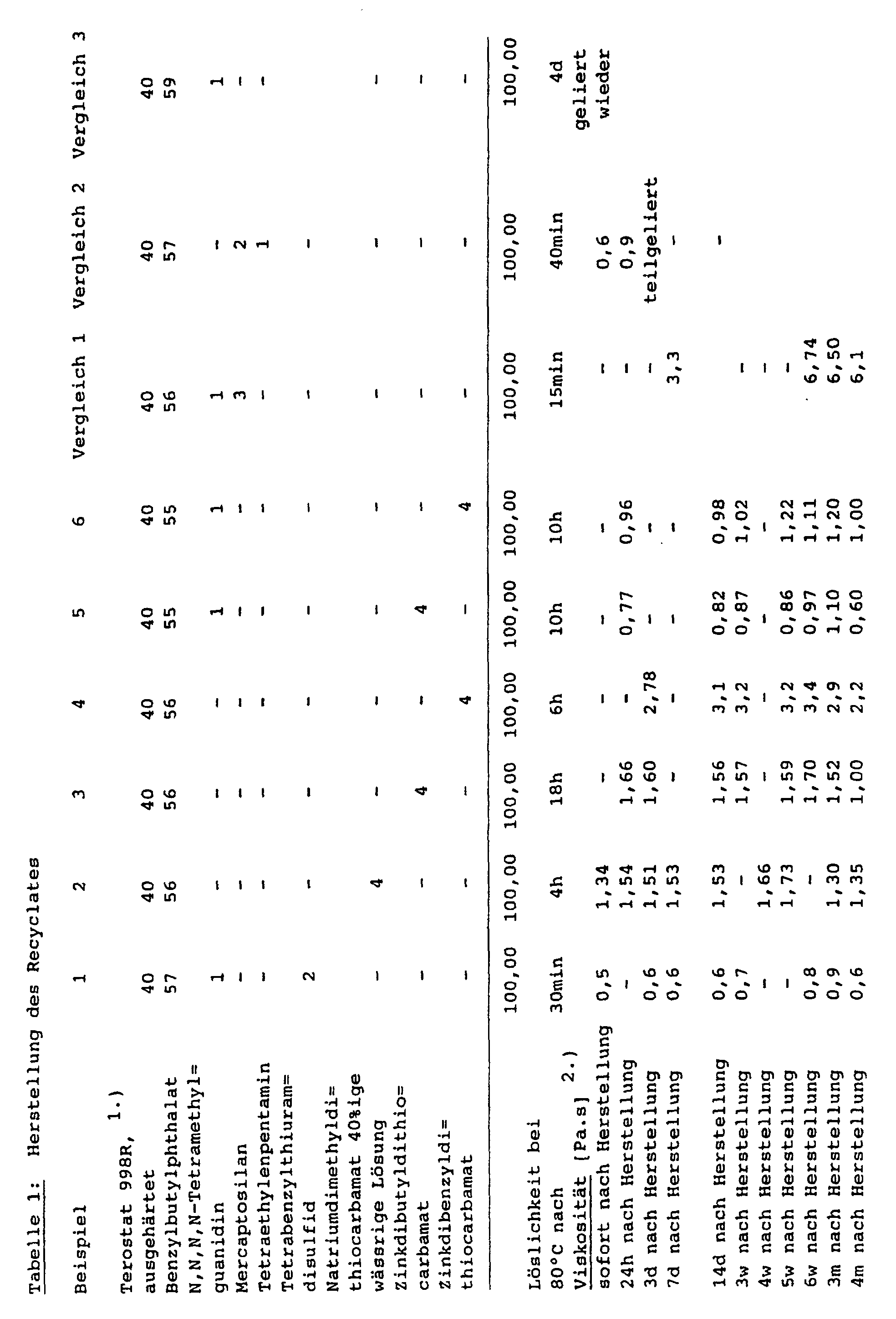

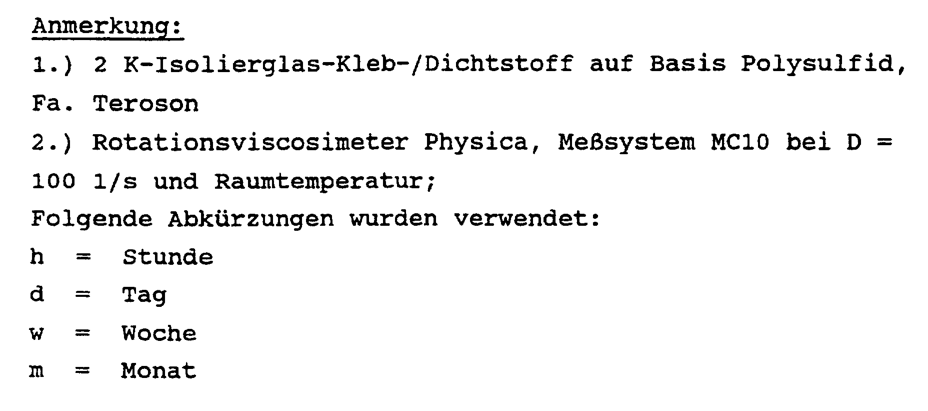

### Herstellung von Härterpasten

In einem Planetenmischer wurden unter Verwendung der Depolymerisate die in nachfolgender Tabelle 2 aufgeführten Härterpasten hergestellt und auf einer Dreiwalze weiter homogenisiert.

**Tabelle 2:**

| Herstellung der Härterpasten | | | |
|---|---|---|---|
| Beispiel | 7 | 8 | 9 |
| Recyclat aus Beispiel 1 | 43 | 50 | |
| Recyclat aus Beispiel 2 | | | 50 |
| Mangandioxid | 23 | 23 | 23 |
| Benzylbutylphthalat | 3,0 | 4,5 | 7,0 |
| Kreide, gemahlen | 6,0 | - | - |
| Schwerspat | 10,7 | 10,0 | 6,54 |
| Füllstoff-/Pigmentmischung | 20,7 | 14,0 | 10,54 |
| Beschleuniger-/Verzögerer-Mischung ^{1.)} | 10,3 | 8,5 | 9,46 |
| | | | |
| Viskosität [Pa.s] ^{2.)} sofort nach Fertigung | 358 | 172 | 139 |
| 24d nach Fertigung | 393 | 154 | - |
| 7d nach Fertigung | 413 | 191 | 165 |
| 2w nach Fertigung | 340 | - | 155 |
| 3w nach Fertigung | - | 207 | - |
| 4w nach Fertigung | 368 | - | 159 |
| 5w nach Fertigung | - | 144 | - |
| 6w nach Fertigung | - | 185 | - |
| 7w nach Fertigung | 348 | - | - |
| 8w nach Fertigung | 369 | 141 | 157 |
| 3m nach Fertigung | 270 | 160 | 130 |

| | | | |
|---|---|---|---|
| 1.) Bestehend aus Schwefel, Tetramethylthiuramdisulfid, Dithiocarbamat, Aminbeschleunigern, Wasser und Isostearinsäure. | | | |
| 2.) Rotationsviskosimeter, Physica, Meßsystem PP30, bei D = 5 1/s und Raumtemperatur. | | | |

### Härtungsversuche:

Die Härtungsversuche wurden mit den oben hergestellten erfindungsgemäßen, Depolymerisat-enthaltenden Härterpasten und im Vergleich dazu mit einer handelsüblichen Härterpaste (Terostat 998 R Komponente B, Fa. Teroson) durchgeführt. Als Komponente A wurde ein handelsüblicher Kleb-/Dichtstoff verwendet (Terostat 998 R, Komponente A, Fa. Teroson). Dieser Kleb-/Dichtstoff wird zur Herstellung von Mehrscheibenisoliergläsern verwendet. Die Versuchsergebnisse sind in der nachfolgenden Tabelle 3 wiedergegeben.

Wie aus der Tabelle 3 ersichtlich, unterscheiden sich die Eigenschaften des Kleb-/Dichtstoffes unter Verwendung der Depolymerisat-haltigen Härterpaste weder in Lagerstabilität, Topfzeit noch in den Härtungseigenschaften von Kleb-/Dichtstoffen, bei denen herkömmliche Härterpasten ohne Depolymerisat-Zusatz verwendet werden.

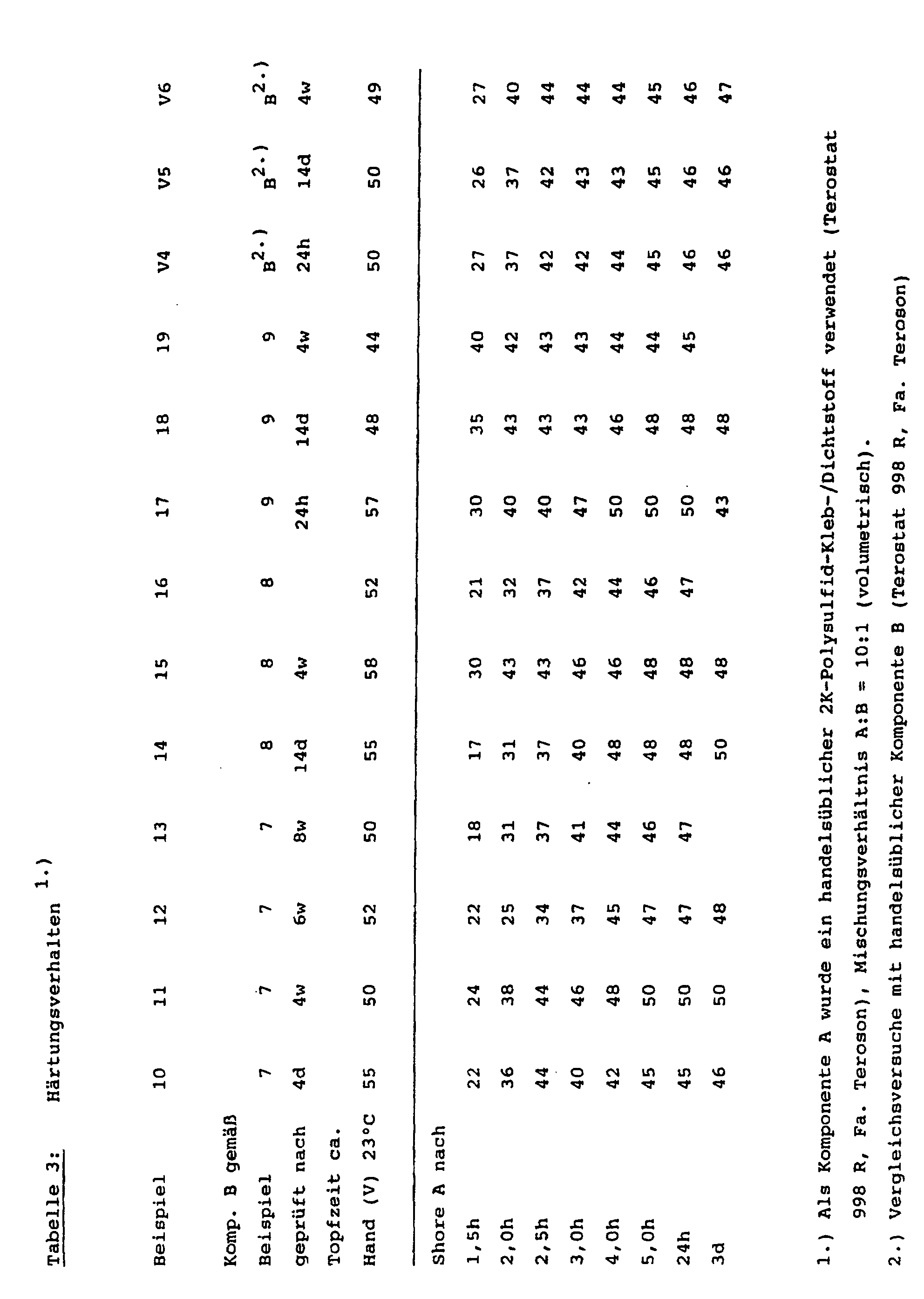

**Tabelle 4:**

| Haftungsprüfung | | | | | | |
|---|---|---|---|---|---|---|
| Beispiel | 11 | 11 | 14 | 14 | 17 | 17 |
| Haftung nach | 24h | 3d | 24h | 3d | 24h | 3d |
| Glas | CF | CF | CF | CF | CF | CF |
| Aluminium verzinktes | CF | CF | CF | CF | CF | CF |
| Stahlblech | CF | CF | C/A 1:1 | CF | CF | CF |

Bei den Beispielen 11 bis 17 (Tabelle 4) wurden die Komponenten A und B im Gewichtsverhältnis 10:1 gemischt. Zur Haftungsprüfung wurden Raupen auf die zu testenden Substrate aufgebracht. Diese wurden im Handversuch schälend abgezogen und das Bruchbild beurteilt. Dabei bedeuten CF: kohäsiver Bruch (cohesive failure), C/A gemischtes Bruchbild mit kohäsiven Anteilen und teilweisem Adhäsionsverlust (Verhältnis etwa 1:1).

In den Vergleichsbeispielen 1 und 2 wurde eine Recyclat analog zu der EP-B-188833 hergestellt. Im Vergleichsbeispiel 3 wurde nach gängigem Fachwissen verfahren. In allen drei Vergleichsbeispielen wird der ausgehärtete Kleb-/Dichtstoff zwar mehr oder weniger schnell abgebaut, das Recyclat geliert jedoch nach relativ kurzer Zeit wieder, vermutlich unter Mitwirkung des Luftsauerstoffs.

Derartige instabile Recyclate sind für die Wiederverwendung unbrauchbar. Die erfindungsgemäßen Recyclate der Beispiele 1 bis 6 liefern hingegen Pasten, die über einen langen Zeitraum viskositätsstabil sind. Wegen der kurzen notwendigen Reaktionszeit sind die Verfahrensweisen gemäß Beispiel 1 und 2 besonders vorteilhaft.

Wie aus der Tabelle 2 hervorgeht, sind nicht nur die Recyclatpasten über einen langen Zeitraum lagerstabil, (viskositätsstabil) sondern auch die aus diesen Recyclaten hergestellten Härterpasten.

Aus der Tabelle 3 ist ersichtlich, daß die erfindungsgemäß hergestellten Härterpasten gegenüber der Komponente A eines handelsüblichen Polysulfid-Kleb-/Dichtstoffes ein völlig gleichwertiges Härtungsverhalten haben wie eine herkömmliche Komponente B-Härterpaste gemäß Stand der Technik.

Aus der Tabelle 4 wird deutlich, daß das gute Haftungsverhalten des 2-Komponenten-Kleb-/Dichtstoffes unter Verwendung der erfindungsgemäßen Recyclat-haltigen Härterpaste auf allen gängigen Substraten unbeeinflußt bleibt.

## Patentansprüche

1. Verfahren zur Wiederaufarbeitung von ausgehärteten oder teilweise ausgehärteten Polysulfid - und/oder Polymercaptan-Polymerzusammensetzungen, **dadurch gekennzeichnet, daß** diese zunächst mit Hilfe eines Vulkanisationsbeschleunigers als Depolymerisierungsmittel in einem niedrigviskosen, nicht flüchtigen flüssigen Weichmacher depolymerisiert werden und danach das Depolymerisat in die Härterkomponente von zweikomponentigen Polysulfid- und/oder Polymercaptan-Zusammensetzungen eingemischt wird.

2. Verfahren nach Anspruch 1, **dadurch gekennzeichnet, daß** mindestens ein Vulkanisationsbeschleuniger aus der Gruppe der Thiazolbeschleuniger, Thiurame, Dithiocarbamate, Dithiocarbamylsulfenamide, Xanthogenate, schwefelhaltiger Triazinbeschleuniger, Thioharnstoffderivate oder sonstiger basischer Schwefelverbindungen ausgewählt wird.

3. Verfahren nach Anspruch 2, **dadurch gekennzeichnet, daß** als Vulkanisationsbeschleuniger wässrige Lösungen der Salze von Dithiocarbamaten, Xanthogenaten, Thioharnstoffderivaten, Thiazolderivaten oder sonstigen basischen Schwefelverbindungen verwendet werden.

4. Verfahren nach mindestens einem der vorhergehenden Ansprüche, **dadurch gekennzeichnet, daß** die Depolymerisation bei Temperaturen von 0°C bis 100°C vorgenommen wird.

5. Zwei- oder mehrkomponentige Zusammensetzungen auf Basis von Polysulfiden und/oder Polymercaptanen, **dadurch gekennzeichnet, daß** die Härterkomponente 2 bis 80 Gew.% eines Depolymerisates, hergestellt nach einem Verfahren gemäß mindestens einem der vorhergehenden Ansprüche, enthält.

6. Zwei- oder mehrkomponentige Zusammensetzung auf Basis von Polysulfiden und/oder Polymercaptanen, **dadurch gekennzeichnet, daß** die Härterkomponente 20 bis 70 Gew.%, eines Depolymerisates, hergestellt nach einem Verfahren gemäß mindestens einem der Ansprüche 1 bis 4, enthält.

7. Zwei- oder mehrkomponentige Zusammensetzungen auf Basis von Polysulfiden und/oder Polymercaptanen, **dadurch gekennzeichnet, daß** die Härterkomponente 40 bis 60 Gew.% eines Depolymerisates, hergestellt nach einem Verfahren gemäß mindestens einem der Ansprüche 1 bis 4, enthält.

8. Zusammensetzungen gemäß Anspruch 5 bis 7, **dadurch gekennzeichnet, daß** die Härterkomponente als Härtungsmittel ein Oxidationsmittel, ausgewählt aus der Gruppe Bleidioxid, Mangandioxid, Verbindungen des sechswertigen Chroms, enthält.

## Claims

1. A process for recycling cured or partly cured polysulfide and/or polymercaptan polymer compositions, **characterized in that** they are first depolymerized with a vulcanization accelerator as depolymerizing agent in a low-viscosity, non-volatile liquid plasticizer and the depolymer is subsequently incorporated in the curing component of two-component polysulfide and/or polymercaptan compositions.

2. A process as claimed in claim 1, **characterized in that** at least one vulcanization accelerator is selected from the group of thiazole accelerators, thiurams, dithiocarbamates, dithiocarbamyl sulfenamides, xanthogenates, sulfur-containing triazine accelerators, thiourea derivatives or other basic sulfur compounds.

3. A process as claimed in claim 2, **characterized in that** aqueous solutions of the salts of dithiocarbamates, xanthogenates, thiourea derivatives, thiazole derivatives or other basic sulfur compounds are used as vulcanization accelerators.

4. A process as claimed in at least one of the preceding claims, **characterized in that** the depolymerization is carried out at temperatures of 0°C to 100°C.

5. Two-component or multi-component compositions based on polysulfides and/or polymercaptans, **characterized in that** the curing component contains 2 to 80% by weight of a depolymer produced by the process claimed in at least one of the preceding claims.

6. Two-component or multi-component compositions based on polysulfides and/or polymercaptans, **characterized in that** the curing component contains 20 to 70% by weight of a depolymer produced by the process claimed in at least one of claims 1 to 4.

7. Two-component or multi-component compositions based on polysulfides and/or polymercaptans, **characterized in that** the curing component contains 40 to 60% by weight of a depolymer produced by the process claimed in at least one of the claims 1 to 4.

8. Compositions as claimed in claims 5 to 7, **characterized in that** the curing component contains an oxidizing agent selected from the group consisting of lead dioxide, manganese dioxide, compounds of hexavalent chromium as curing agent.

## Revendications

1. Procédé de récupération de compositions de polymères à base de polysulfures et/ou de polymercaptans durcis ou partiellement durcis,
**caractérisé en ce qu'**
on dépolymérise ceux-ci en premier lieu à l'aide d'un accélérateur de vulcanisation en tant qu'agent de dépolymérisation dans un agent plastifiant peu visqueux, non volatil, liquide, et ensuite on introduit par mélange le produit dépolymérisé dans le composant de durcisseur des compositions à base de polyaulfure et/ou de polymercaptan à deux composants.

2. Procédé selon la revendication 1,
**caractérisé en ce qu'**
au moins un accélérateur de vulcanisation est choisi dans le groupe des accélérateurs thiazolianes, les thiurames, les dithiocarbamates, les di. thiocarbamylsulfénamides, les xanthogénates, les accélérateurs triazimiques contenant du soufre, des dérivés de thiourée ou les autres composés soufrés basiques.

3. Procédé selon la revendication 2,
**caractérisé en ce que**
comme accélérateur de vulcanisation on utilise des solutions aqueuses dea sels de dithiocarbamates, de xanthogénates, de dérivés de thiourée, des dérivés thiozoliques ou d'autres composés soufre basiques.

4. Procédé selon l'une quelconque des revendications précédentes,
**caractérisé en ce que**
la dépolymérisation est effectuée à des températures allant de 0°C à 100°C.

5. Compositions à deux ou à plusieurs composants à base de polysulfures et/ou de polyrnercaptans,
**caractérisées en ce que**
le composant de durcisseur contient de 2 à 80 % en poids d'un produit de dépolymérisation préparé selon un procédé conformément à au moins l'une quelconque des revendications précédentes.

6. Compositions à deux ou à plusieurs composants à base de polysulfures et/ou de polymercaptans,
**caractérisées en ce que**
le composant de durcisseur renferme de 20 à 70 % en poids d'un produit de dépolymérisation, préparé selon un procédé conformément à au moins l'une quelconque des revendications 1 à 4.

7. Compositions à deux ou à plusieurs composants à base de polysulfures et/ou de polymercaptans,
**caractérisées en ce que**
le composant de durcisseur renferme de 40 à 60 % en poids d'un produit de dépolymérisation selon un procédé conformément à au moins l'une quelconque des revendications 1 à 4.

8. Compositions conformément à l'une quelconque des revendications 5 à 7,
**caractérisées en ce que**
le composant de durcisseur renferme comme agent de durcissement, un agent oxydant choisi dans le groupe du dioxyde de plomb, du dioxyde de manganèse et des composés du chrome, à six liaisons de Valence.
